# EUROPEAN PATENT SPECIFICATION

(11) **EP 1 593 528 B1**
(45) Date of publication and mention of the grant of the patent: **10.01.2007**
(21) Application number: 05103529.3
(22) Date of filing: 28.04.2005
(51) Int. Cl.: B60C 1/00, C08L 9/00, C08L 7/00

(54) **Tire with tread of specialized trans 1,4-polybutadiene polymer and cis 1,4-polyisoprene natural rubber**
Reifen mit Lauffläche aus speziellem trans-1,4-Polybutadien-Polymer und cis-1,4-Polyisopren-Naturkautschuk
Pneu avec des bandes de roulement contenant du trans-1,4-polybutadiène specialisé et du caoutchouc naturel du cis-1,4-polyisoprène

(30) Priority: 03.05.2004 US 837740; 02.06.2004 US 859524
(43) Date of publication of application: 09.11.2005
(73) Proprietor: THE GOODYEAR TIRE & RUBBER COMPANY, Akron, Ohio 44316-0001 (US)
(72) Inventor: Sandstrom, Paul Harry, Cuyahoga Falls, Ohio 44223 (US); Halasa, Adel Farhan, Bath, Ohio 44210 (US); Hsu, Wen-Liang, Cuyahoga Falls, Ohio 44223 (US); Beers, Roger Neil, Uniontown, Ohio 44685 (US); Jasiunas, Chad Aaron, Copley, Ohio 44321 (US)
(74) Representative: Kutsch, Bernd

(56) References cited:
- EP-A- 0 505 904
- EP-A- 0 900 826
- EP-A- 0 989 161
- EP-A- 1 092 565
- US-A- 5 753 761

## Description

### Field of the Invention

This invention relates to a tire with a tread of a natural rubber-rich rubber composition. A partial replacement of the natural rubber in the tire tread is accomplished by an inclusion of a relatively low Mooney viscosity specialized trans 1,4-polybutadiene. The tire tread rubber composition is comprised of a blend of the specialized trans 1,4-polybutadiene polymer and cis 1,4-polyisoprene natural rubber optionally together with at least one additional diene-based elastomer in which the natural rubber remains a major portion of the elastomers in the tread rubber composition. A significant aspect of the invention is a partial replacement of natural cis 1,4-polyisoprene rubber in the tread rubber composition. The specialized trans 1,4-polybutadiene polymer has a relatively low Mooney (ML1+4), 100°C, viscosity within a range of 25 to 55. The specialized trans 1,4-polybutadiene polymer has a weight average molecular weight (Mw) of less than 220,000, preferably within a range of from 100,000 to 220,000, a number average molecular weight (Mn) of less than 120,000, preferably within a range of from 60,000 to 120,000 and a microstructure comprised of a trans 1,4- isomeric unit content in a range of from 70 to 90, preferably 75 to 85 percent.

### Background of the Invention

A challenge is presented of replacing a portion of natural cis 1,4-polyisoprene rubber with a synthetic polymer in a natural rubber-rich tire tread rubber composition to achieve a rubber composition of similar physical properties. A motivation for such challenge is a desire for a natural rubber alternative, at least a partial alternative, in a form of a synthetic rubber to offset relative availability and/or cost considerations of natural rubber.

Therefore, such challenge has been undertaken to evaluate the feasibility of replacing a portion of natural rubber in a tire tread (for rubber treads which contain a significant amount of natural rubber such as treads for heavy duty tires) with a synthetic rubber.

A simple substitution of a synthetic elastomer into a tire tread rubber composition which contains a significant natural rubber content is not considered herein to be a feasible alternative where it is desired to achieve a rubber composition with similar physical properties.

In practice, pneumatic rubber tires conventionally have rubber treads which contain a running surface of the tire intended to be ground contacting.

Such tire treads are subject, under operating conditions, to considerable dynamic distortion and flexing, abrasion due to scuffing, fatigue cracking and weathering such as, for example, atmospheric aging.

Tires, particularly large tires such as for example, large off-the-road, truck, agricultural tractor, as well as aircraft tires, which are intended to be subject to heavy loads and inherent tendency of internal heat build up and associated high temperature operation, generally contain a significant natural cis 1,4-polyisoprene rubber content, because of, for example, the well known heat durability of the natural rubber as compared to synthetic diene based elastomers in general. Such tires may have a tread which is of a natural rubber-rich rubber composition, namely which contains more than 50 phr of natural rubber.

Significant physical properties for the natural rubber-rich tire tread rubber compositions are considered herein to be rebound (at 100°C) and tan delta (at 100°C) which contribute to rolling resistance of the tire and therefore fuel economy of the associated vehicle, with higher values being desired for the Rebound property and lower values being desired for the tan delta property.

Additional desirable physical properties are considered herein to be higher low strain stiffness properties, in combination with the above rebound and tan delta properties, as indicated by Shore A hardness values and G' at 10 percent strain values at 100°C to promote cornering coefficient and handling for the tire and resistance to tread wear.

Further desirable properties for the tread rubber composition include relatively high tear strength values at 23°C or 100°C to promote resistance to chip chunking for the tire tread as well as relatively low DIN abrasion values to promote resistance to abrasive wear (e.g. promote resistance to tread wear) as the associated vehicle is being driven.

Accordingly, it is readily seen that a partial substitution of a synthetic rubber for a portion of the natural rubber in a natural rubber-rich tread rubber composition is not a simple matter, and requires more than routine experimentation, where it is desired to substantially retain, or improve upon, a suitable balance of the representative physical properties of the natural rubber-rich tread rubber composition itself.

Generally, such tire tread rubber compositions may also contain various amounts of additional synthetic diene-based elastomers. Such additional synthetic diene based elastomers may include, for example, cis 1,4-polybutadiene rubber to enhance, for example, abrasion resistance and associated resistance to tread wear as well as styrene/butadiene copolymer elastomers to enhance, for example tread traction.

For example, use of trans 1,4-polybutadiene rubber in various tire treads has been suggested in JP-A- 60-113,036; 62-101,504 and 61-143,453 and US-A- 5,025,059, 4,510,291, 5,229,459, 5,739,198, 5,753,761, 5,780,537, 5,901,766, 6,581,659 and 6,046,266. Partial replacement of natural rubber with trans copolymers of isoprene and 1,3-butadiene has been suggested in US-A-5,844,044.

However, for this invention, a tire tread, with running surface, is presented of a rubber composition which is comprised of a natural rubber-rich rubber composition in which a major rubber portion of its rubber content is natural cis 1,4-polyisoprene rubber and minor rubber portion as a specialized trans 1,4-polybutadiene polymer. The specialized trans 1,4-polybutadiene polymer is of a relative low Mooney (ML 1+4) viscosity (100°C) within a range of from 25 to 55, preferably within a range of from 25 to 40. It is comprised of a trans 1,4-microstructure content in a range of from 70 to 90 percent, preferably from 75 to 85 percent, and preferably has a glass transition temperature (Tg) within a range of -85°C to -95°C. The specialized trans 1,4-polybutadiene polymer for this invention has an Mw (weight average molecular weight) below 220,000 and an Mn (number average molecular weight) below 120,000.

In the practice of this invention, the specialized trans 1,4-polybutadiene polymers have been observed to enable a partial replacement of the natural cis 1,4-polyisoprene rubber in natural rubber-rich tread compositions of relatively large tires which are designed to experience relatively large loads under working conditions with an associated internal heat generation.

A reference to glass transition temperature, or Tg, of an elastomer or sulfur vulcanizable polymer, particularly the specialized trans 1,4-polybutadiene polymer, represents the glass transition temperature of the respective elastomer or sulfur vulcanizable polymer in its uncured state. The Tg can be suitably determined by a differential scanning calorimeter (DSC) at a temperature rate of increase of 10°C per minute.

A reference to melt point, or Tm, of a sulfur vulcanizable polymer, particularly the specialized trans 1,4-polybutadiene polymer, represents its melt point temperature in its uncured state, using basically the same or similar procedural method as for the Tg determination, using a temperature rate of increase of 10°C per minute.

A reference to molecular weight, such as a weight average molecular weight (Mw), or number average molecular weight (Mn), of an elastomer or sulfur vulcanizable polymer, particularly the specialized trans 1,4-polybutadiene polymer, represents the respective molecular weight of the respective elastomer or sulfur vulcanizable polymer in its uncured state. The molecular weight can be suitably determined by GPC (gel permeation chromatograph instrument) analysis.

A reference to Mooney (ML 1+4) viscosity of an elastomer or sulfur vulcanizable polymer, particularly the specialized trans 1,4-polybutadiene polymer, represents the viscosity of the respective elastomer or sulfur vulcanizable polymer in its uncured state. The Mooney (ML 1+4) viscosity at 100°C relates to its "Mooney Large" viscosity, taken at 100°C using a one minute warm up time and a four minute period of viscosity measurement.

In the description of this invention, the terms "compounded" rubber compositions and "compounds" where used refer to the respective rubber compositions which have been compounded with appropriate compounding ingredients such as, for example, carbon black, oil, stearic acid, zinc oxide, silica, wax, antidegradants, resin(s), sulfur and accelerator(s) and silica and silica coupler where appropriate. The terms "rubber" and "elastomer" may be used interchangeably. The amounts of materials are usually expressed in parts of material per 100 parts of rubber polymer by weight (phr).

### Disclosure and Practice of the Invention

In accordance with this invention, a tire having a tread (with a tire running surface intended to be ground contacting) is provided wherein said tread is of a natural rubber-rich rubber composition comprised of, based upon parts by weight per 100 parts by weight rubber (phr):
(A) from 2 to 45 phr, alternately from 5 to 40 phr, of a specialized trans 1,4-polybutadiene polymer having a microstructure containing from 70 to 90, preferably from 75 to 85, percent trans 1,4-units, a Mooney (ML 1+4) viscosity at 100°C in a range of from 25 to 55, alternately from 25 to 40, a Tg in a range of from -85°C to -95°C, an Mw (number average molecular weight) of less than 222,000, preferably in a range of from 100,000 to 220,000 and an Mn (number average molecular weight) of less than 120,000, preferably in a range of from 60,000 to 120,000;
(B) from 98 to 55, alternately 95 to 60, phr of natural cis 1,4-polyisoprene rubber having a Mooney (ML 1+4) viscosity (100°C) in a range of 60 to 100;
(C) from zero to 20, alternately 5 to 15, phr of at least one additional synthetic diene-based elastomer, so long as said natural rubber content of said rubber composition is at least 55 phr, selected from polymers of isoprene and/or 1,3-butadiene (in addition to said specialized trans 1,4-polybutadiene polymer) and copolymers of styrene together with isoprene and/or 1,3-butadiene; and
(D) from 30 to 120, alternately from 30 to 100, phr of particulate reinforcing fillers comprising:
   (1) 5 to 120, alternately from 5 to 40 and alternately from 30 to 70, phr of rubber reinforcing carbon black, and
   (2) from zero to 60, alternately from 5 to 60 and further alternately from 5 to 25, phr of amorphous synthetic silica, preferably precipitated silica.

Optionally, the reinforcing filler may also contain a silica-containing carbon black which contains domains of silica on its surface wherein the silica domains contain hydroxyl groups on their surfaces.

The silica (e.g. precipitated silica) may optionally, and if desired, be used in conjunction with a silica coupler to couple the silica to the elastomer(s), to thus enhance its effect as reinforcement for the elastomer composition. Use of silica couplers for such purpose are well known and typically have a moiety reactive with hydroxyl groups (e.g. silanol groups) on the silica and another moiety interactive with the elastomer(s) to create the silica-to-rubber coupling effect.

As hereinbefore pointed out, the specialized trans 1,4-polybutadiene polymer preferably has a microstructure composed of 75 to 85 percent of its repeat units of a trans 1,4-isomeric structure, 10 to 20 percent of its units of a cis 1,4-isomeric structure and 3 to 5 percent of its units of a vinyl 1,2-structure.

In practice, the specialized trans 1,4-polybutadiene polymer has dual melting points (Tm's) within a temperature range of from 10°C to 45°C which are composed of a first melting point in a range of from 15°C to 25°C and a second, spaced apart, melting point in a range of from 25°C to 40°C.

The specialized trans 1,4-polybutadiene polymer may be prepared, for example, by polymerization in an organic solvent in the presence of a catalyst composite composed of the barium salt of di(ethylene glycol) ethylether (BaDEGEE), tri-n-octylaluminum (TOA) and n-butyl lithium (n-BuLi) in a molar ratio of the BaDEGEE to TOA to n-BuLi in a range of 1:4:3, which is intended to be an approximate molar ratio, so long as the resulting trans 1,4-polybutadiene polymer is the said specialized trans 1,4-polybutadiene polymer which is considered herein to not require undue experimentation by one having skill in such art.

For example, the catalyst composite may be composed of 7.2 ml of a 0.29 M solution of the barium salt of di(ethylene glycol) ethylether (BaDEGEE) in suitable solvent such as, for example, ethylbenzene, 16.8 ml of a 1 M solution of tri-n-octylaluminum (TOA) in a suitable solvent such as, for example, hexane and 7.9 ml of a 1.6 M solution of n-butyl lithium (n-BuLi) in a suitable solvent such as, for example, hexane. The molar ratio of the three catalyst components, namely the BaDEGEE to TOA to n-BuLi may be, for example, said 1:4:3.

As disclosed in US-A- 6,627,7165, a four component catalyst system which consists of the barium salt of di(ethylene glycol) ethylether (BaDEGEE), amine, the tri-n-ocytylaluminum (TOA) and the n-butyl lithium (n-BuLi) may also be used to prepare high trans 1,4-polybutadiene polymers for use as a partial replacement of natural rubber in a natural rubber-rich tread rubber composition. The molar ratio of the BaDEGEE, to amine to TOA to n-BuLi catalyst components is 1:1:4:3, which is intended to be an approximate ratio in which the amine can be a primary, secondary or tertiary amine and may be a cyclic, acyclic, aromatic or aliphatic amine, with exemplary amines being, for example, n-butyl amine, isobutyl amine, tert-butyl amine, pyrrolidine, piperidine and TMEDA (N, N, N',N'-tetramethylethylenediamine, preferably pyrrolidine, so long as the resulting trans 1,4-polybutadiene polymer is the said specialized trans 1,4-polybutadiene polymer which is considered herein to not require undue experimentation by one having skill in such art.

In one aspect, the catalyst composite may be pre-formed prior to introduction to the 1,3-butadiene monomer or may be formed in situ by separate addition, or introduction, of the catalyst components to the 1,3-butadiene monomer so long as the resulting trans 1,4-polybutadiene polymer is the aforesaid specialized trans 1,4-polybutadiene polymer. The pre-formed catalyst composite may, for example, be a tri-component pre-formed composite comprised of all three of the BaDEGEE, TOA and BuLi components prior to introduction to the 1,3-butadiene monomer or may be comprised of a dual pre-formed component composite comprised of the BaDEGEE and TOA components to which the n-BuLi component is added prior to introduction o the 1,3-butadiene monomer.

In one aspect, the organic solvent polymerization may be conducted as a batch or as a continuous polymerization process. Batch polymerization and continuous polymerization processes are, in general, well known to those having skill in such art.

As hereinbefore mentioned, a coupling agent may, if desired, be utilized with the silica to aid in its reinforcement of the rubber composition which contains the silica. Such coupling agent conventionally contains a moiety reactive with hydroxyl groups on the silica (e.g. precipitated silica) and another and different moiety interactive with the diene hydrocarbon based elastomer.

In practice, said coupling agent may be, for example,
(A) a bis-(3-triakloxysilylalkyl) polysulfide such as, for example, a bis-(3-triethoxysilylpropyl) polysulfide which contains from 2 to 8 sulfur atoms with an average of from 2 to 4, preferably from 2.2 to 4, and more preferably an average of from 2 to 2.6 or from 3.4 to 4, connecting sulfur atoms in its polysulfidic bridge, or
(B) a bis-(3-triethoxysilylpropyl) polysulfide having an average of from 2 to 2.6 connecting sulfur atoms in its polysulfidic bridge or a bis-(3-triethoxysilylpropyl) polysulfide having an average of from 3.4 to 4 connecting sulfur atoms in its polysulfidic bridge, wherein said polysulfide having an average of from 2 to 2.6 connecting sulfur atoms in its polysulfidic bridge (to the exclusion of such polysulfide having an average of from 3 to 4 connecting sulfur atoms in its polysulfidic bridge) is blended with said rubber composition in the absence of sulfur and sulfur vulcanization accelerator and wherein said polysulfide having an average of from 3.4 to 4 connecting sulfur atoms in its polysulfidic bridge is thereafter blended with said rubber composition in the presence of sulfur and at least one sulfur vulcanization accelerator, or
(C) an organoalkoxymercaptosilane composition of the general Formula (I) represented as:

   (I) (X)ₙ(R₇O)₃₋ₙ - Si - R₈ - SH

   wherein X is a radical selected from a halogen, namely chlorine or bromine and preferably a chlorine radical, and from alkyl radicals having from one to 16, preferably from one through 4, carbon atoms, preferably selected from methyl, ethyl, propyl (e.g. n-propyl) and butyl (e.g. n-butyl) radicals;
   wherein R₇ is an alkyl radical having from 1 through 18, alternately 1 through 4, carbon atoms preferably selected from methyl and ethyl radicals and more preferably an ethyl radical; wherein R₈ is an alkylene radical having from one to 16, preferably from one through 4, carbon atoms, preferably a propylene radical; and n is an average value of from zero through 3, preferably zero, and wherein, in such cases where n is zero or 1, R₇ may be the same or different for each (R₇O) moiety in the composition, and
(D) said organalkoxyomercaptosilane of the general Formula (I) capped with a moiety which uncaps the organoalkoxymercaptosilane upon heating to an elevated temperature.

Representative examples of various organoalkoxymercaptosilanes are, for example, triethoxy mercaptopropyl silane, trimethoxy mercaptopropyl silane, methyl dimethoxy mercaptopropyl silane, methyl diethoxy mercaptopropyl silane, dimethyl methoxy mercaptopropyl silane, triethoxy mercaptoethyl silane, tripropoxy mercaptopropyl silane, ethoxy dimethoxy mercaptopropylsilane, ethoxy diisopropoxy mercaptopropylsilane, ethoxy didodecyloxy mercaptopropylsilane and ethoxy dihexadecyloxy mercaptopropylsilane.

Such organoalkoxymercaptosilanes may be capped with various moieties as discussed above.

A representative example of a capped organoalkoxymercaptosilane coupling agent useful for this invention is a liquid 3-octanoylthio-1-propyltriethoxysilane as NXT™ Silane from the GE Silicones Company.

The coupling agent may, for example, be added directly to the elastomer mixture or may be added as a composite of precipitated silica and such coupling agent formed by treating a precipitated silica therewith or by treating a colloidal silica therewith and precipitating the resulting composite.

For example, said silica (e.g. precipitated silica), or at least a portion of said silica, may be pre-treated prior to addition to said elastomer(s):
(A) with an alkylsilane of the general Formula (II), or
(B) with said bis(3-triethoxysilylpropyl) polysulfide having an average of from 2 to 4 connecting sulfur atoms in its polysulfidic bridge, or
(C) with said organomercaptosilane of the general Formula (I), or
(D) with a combination of said alkylsilane of general Formula (I) and said bis(3-triethoxysilylpropyl) polysulfide having an average of from 2 to 4 connecting sulfur atoms in its polysulfidic bridge, or
(E) with a combination of said alkylsilane of general Formula (II) and said organomercaptosilane of general Formula (I);
wherein said alkylsilane of the general Formula (I) is represented as:

(II) Xₙ - Si - R₆₍₄₋ₙ₎

wherein R₆ is an alkyl radical having from 1 to 18 carbon atoms, preferably from 1 through 4 carbon atoms; n is a value of from 1 through 3; X is a radical selected from the group consisting of halogens, preferably chlorine, and alkoxy groups selected from methoxy and ethoxy groups, preferably an ethoxy group.

A significant consideration for said pre-treatment of said silica is to reduce, or eliminate, evolution of alcohol in situ within the rubber composition during the mixing of the silica with said elastomer such as may be caused, for example, by reaction such coupling agent contained within the elastomer composition with hydroxyl groups (e.g. silanol groups) contained on the surface of the silica.

Representative of additional synthetic diene based elastomers for said tread rubber composition are, for example, synthetic cis 1,4-polyisoprene rubber, cis 1,4-polybutadiene rubber, styrene/butadiene copolymer rubber, isoprene/butadiene copolymer rubber, styrene/isoprene/butadiene terpolymer rubber, and 3,4-polyisoprene rubber.

It is readily understood by those having skill in the art that the rubber compositions would be compounded by methods generally known in the rubber compounding art, such as mixing the various sulfur-vulcanizable constituent rubbers with various commonly used additive materials such as, for example, curing aids, such as sulfur, activators, retarders and accelerators, processing additives, such as oils, resins including tackifying resins, silicas, and plasticizers, fillers, pigments, fatty acid, zinc oxide, waxes, antioxidants and antiozonants, peptizing agents and reinforcing materials such as, for example, carbon black. As known to those skilled in the art, depending on the intended use of the sulfur vulcanizable and sulfur-vulcanized material (rubbers), the additives mentioned above are selected and commonly used in conventional amounts.

Typical additions of reinforcing carbon black have been hereinbefore discussed. Typical amounts of tackifier resins, if used, may comprise 0.5 to 10 phr. Typical amounts of processing aids may comprise 1 to 20 phr. Such processing aids can include, for example, aromatic, napthenic, and/or paraffinic processing oils. Typical amounts of antioxidants comprise 1 to 5 phr. Representative antioxidants may be, for example, diphenyl-p-phenylenediamine and others, such as, for example, those disclosed in The Vanderbilt Rubber Handbook (1978), Pages 344 through 346. Typical amounts of antiozonants comprise 1 to 5 phr. Typical amounts of fatty acids, if used, which can include stearic acid comprise 0.5 to 3 phr. Typical amounts of zinc oxide comprise 2 to 6 phr. Typical amounts of waxes comprise 1 to 5 phr. Typical amounts of peptizers comprise 0.1 to 1 phr. Typical peptizers may be, for example, pentachlorothiophenol and dibenzamidodiphenyl disulfide.

The vulcanization is conducted in the presence of a sulfur-vulcanizing agent. Examples of suitable sulfur vulcanizing agents include elemental sulfur (free sulfur) or sulfur donating vulcanizing agents, for example, an amine disulfide, polymeric polysulfide or sulfur olefin adducts.

Accelerators are used to control the time and/or temperature required for vulcanization and to improve the properties of the vulcanizate. In one embodiment, a single accelerator system may be used, i.e., primary accelerator. Conventionally, a primary accelerator is used in amounts ranging from 0.5 to 2.0 phr. In another embodiment, combinations of two or more accelerators in which the primary accelerator is generally used in the larger amount (0.5 to 2 phr), and a secondary accelerator which is generally used in smaller amounts (0.05-0.50 phr) in order to activate and to improve the properties of the vulcanizate. Suitable types of accelerators that may be used in the present invention are amines, disulfides, guanidines, thioureas, thiazoles, thiurams, sulfenamides, dithiocarbamates and xanthates. Preferably, the primary accelerator is a sulfenamide. If a second accelerator is used, the secondary accelerator is preferably a guanidine, dithiocarbamate or thiuram compound.

The tire can be built, shaped, molded and cured by various methods which will be readily apparent to those having skill in such art.

The invention may be better understood by reference to the following example in which the parts and percentages are by weight unless otherwise indicated.

### BACKGROUND EXAMPLE I

### Preparation of Trans 1,4-Polybutadiene Polymer by Catalyst Formation In Situ

This Example represents a demonstration of preparation of a trans 1,4-polybutadiene polymer having a low Mooney viscosity, relatively low Tg and dual melt temperatures (Tm's).

The preparation is by a batch polymerization process by polymerization of 1,3-butadiene monomer with a catalyst system composed of barium salt of di(ethylene glycol) ethylether (BaDEGEE), tri-n-octylaluminum (TOA) and n-butyllithium (n-BuLi).

For the preparation of the trans 1,4-polybutadiene polymer for this Example, 2200 g (grams) of a silica/alumina/molecular sieve dried pre-mixture (premix) of 1,3-butadiene monomer and hexane solvent was prepared which contained 19.1 weight percent 1,3-butadiene. The premix was charged into a one-gallon (3.8 liters) reactor.

To the premix in the reactor was then added 7.2 ml (milliliters) of a 0.29 M (Molarity) solution of a barium salt of di(ethylene glycol) ethylether (BaDEGEE) in ethylbenzene, 16.8 ml of a 1 M solution of tri-n-octylaluminum (TOA) in hexane and 7.9 ml of 1.6 M solution of n-butyllithium (n-BuLi) in hexane. The molar ratio of BaDEGEE to TOA to n-BuLi was 1:4:3.

The polymerization of the 1,3-butadiene monomer was carried out at 90°C for 1.5 hours. The GC (gas chromatagraphic) analyses of the residual unreacted monomer contained in the polymerization mixture indicated that the monomer conversions at 60 and 90 minutes were 90 percent and 96 percent, respectively. One milliliter (ml) of neat ethanol was added to shortstop the polymerization. The shortstopped polymer cement was then removed from the reactor and stabilized with 1 phm (parts per hundred parts of monomer by weight) of antioxidant. The volatile solvents (hexane, etc) were substantially removed by evaporation under atmospheric conditions at 50°C and the recovered polymer was further dried in a vacuum oven at 50°C.

The recovered polybutadiene polymer was determined to have a glass transition temperature (Tg) of -90°C and two spaced apart melting point temperatures (Tm's) at 22°C and 35°C, respectively.

The recovered polybutadiene polymer was determined by a carbon 13 NMR (nuclear magnetic resonance analytical instrument) to have a microstructure composed of 3.2 percent 1,2-polybutadiene units, 16.1 percent cis-1,4-polybutadiene units, and 80.3 percent trans-1,4-polybutadiene units. The polybutadiene polymer was determined to have a Mooney viscosity (ML1+4) at 100°C of 37. According to GPC (Gel Permeation Chromatograph analytical instrument) analysis, the polybutadiene polymer had a number average molecular weight (Mn) of 115,000 and a weight average molecular weight (Mw) of 145,000. The heterogeniety index (HI) of the polybutadiene polymer, represented as its (Mw/Mn) ratio, was therefore 1.27.

It is concluded herein that this Example represents a demonstration that a trans 1,4-polybutadiene polymer can be prepared having a relatively low Mooney (ML 1+4), at 100°C, viscosity together with a relatively low Tg and dual, spaced apart, melt temperatures (Tm's). A detailed description of the catalyst system is disclosed in US-A- 6,627,715.

### BACKGROUND EXAMPLE II

### Preparation of Trans 1,4-Polybutadiene Polymer by Pre-Formed Catalyst

This Example represents a demonstration preparation of a trans 1,4-polybutadiene polymer having a relatively high Mooney viscosity and relatively low Tg, with dual melt temperatures (Tm's).

The preparation is by a batch polymerization process by polymerization of 1,3-butadiene monomer with a pre-formed catalyst system composed of barium salt of di(ethylene glycol) ethylether (BaDEGEE), tri-n-octylaluminum (TOA) and n-butyllithium (n-BuLi).

A trans 1,4-polybutadiene polymer was prepared in a manner similar to Example I except that the catalyst was pre-formed prior to introduction of the 1,3-butadiene monomer.

The pre-formed catalyst was made by reacting the BaDEGEE, in ethylbenzene solvent, with the TOA, in hexane solvent, and followed by n-BuLi, in hexane solvent, at the molar ratio of 1:4:3. The preformed catalyst was added to the reactor containing 1,3-butadiene monomer dissolved in hexane and the polymerization allowed to proceed as in Example I.

The GC analyses of the residual monomer contained in the polymerization mixture indicated that the 1,3-butadiene monomer conversions at 60 and 90 minutes were 89 percent and 96 percent, respectively.

The recovered polybutadiene polymer was determined to have a glass transition temperature (Tg) of -90°C and two spaced apart melting points (Tm's) at 21 °C and 37°C, respectively. The recovered polybutadiene polymer was determined to have a microstructure that contained 3.2 percent 1,2-polybutadiene units, 14.5 percent cis-1,4-polybutadiene units, and 82.3 percent trans-1,4-polybutadiene units. The Mooney viscosity (ML 1+4), at 100°C, was determined to be 68. The Mn and Mw of the resulting polymer were 132,000 and 182,000, respectively, with its heterogeniety index thereby being 1.38.

### BACKGROUND EXAMPLE III

### Preparation of Trans 1,4-Polybutadiene Polymer by Continuous Polymerization

This Example represents a demonstration of preparation of a trans 1,4-polybutadiene polymer having a relatively high Mooney viscosity, a low Tg and dual melt (Tm) temperatures.

The preparation of the trans 1,4-polybutadiene is by a continuous polymerization process by polymerization of 1,3-butadiene monomer with a catalyst system composed of barium salt of di(ethylene glycol) ethylether (BaDEGEE), tri-n-octylaluminum (TOA) and n-butyllithium (n-BuLi).

Samples of high trans 1,4- polybutadiene polymers were prepared in continuous polymerization reactors. The Samples were individually prepared by conducting the respective polymerizations in two sequential five liter jacketed reactors connected in series.

Each reactor was equipped with three 3-inch (7.6 cm) diameter axial flow turbines (AFT's) and were equipped with internal baffles to aid in the mixing process. Agitation in the reactors was conducted at a turbine rotor speed of approximately 450 rpm. Residence time was set at 0.645 hours in the first reactor, 0.084 hours in the connective tubular piping between the reactors, 0.655 hours in the second reactor, and 0.117 hours in the connective tubular piping to the cement mixer (a total of 1.50 hours). The first reactor's internal temperature was controlled at 200°F (93°C) and the second reactor's internal temperature was controlled at 195°F (90°C), assisted by an ethylene glycol fed cooling jacket around each of the reactors.

Respective materials were metered and pressure fed into the continuous reactor configuration. The material entry system into the first reactor consisted of an inner dip leg composed of 1/8 inch (0.32 cm) SS (stainless steel) tubing inside of an outer dip leg composed of 0.25 inch (0.64 cm) SS tubing. The tubing for each of the two dip legs passed through a separate temperature controlled heat exchanger prior to entering the reactor. The coupling agent was fed into the bottom of the cement mixer with the cement being fed from the second reactor.

One of such materials fed into the first reactor was a premix of the 1,3-butadiene monomer in hexane solvent composed of 20.329 weight percent 1,3-butadiene in hexane, which also contained 50 parts of 1,2-butadiene per million parts 1,3-butadiene. The monomer pre-mix was metered through a heat exchanger at 200°F (93°C) at a rate of 4956.4 grams per hour and into the first reactor.

Another material fed into the first reactor was a 10 weight percent solution of BaDEGEE (barium salt of di(ethyleneglycol) ethylether) in hexane with a flow rate of 19.66 grams per hour was added to a 25 weight percent TOA (trioctylaluminum) in hexane with a flow rate of 29.13 grams per hour, and this mixture was added to a 3.96 weight percent n-BuLi (n-butyllithium) in hexane with a flow rate of 24.10 grams per hour. This solution was passed through a heat exchanger at 200°F (93°C) and then entered the first reactor through the inner dipleg. This gave a feed rate of 0.5 millimoles of barium per 100 grams of monomer, 4 moles of TOA per mole of barium, and 3 moles n-BuLi per mole of barium.

The experimental preparation of the polybutadiene polymers was started with the reactors full of dry hexane. The polymerizate, composed of a partially reacted 1,3-butadiene monomer in the solvent and catalyst system and sometimes referred to as a cement, flowed from the first reactor to the second reactor, through a cement mixer. The experimental polymer preparation was allowed to proceed for 4.5 hours to allow for three complete turnovers in the system and to achieve a steady state in the system. The system was determined to be at steady state when the temperature profile in the reactors and the reactor monomer to polymer conversions maintained constant values.

After achieving the steady state, the resultant polybutadiene polymer cement was collected for the next two hours. One-half hour after cement collection began, 24.2 grams of 10 percent by weight of isopropanol in hexane (4.0 moles of isopropanol per mole of barium) was added to stop the polymerization and 201.5 grams of 10 percent by weight of antioxidant in hexane was added to protect and stabilize the polymer.

The cement (polymer dissolved in hexane) was recovered in a five gallon (18.9 liter) bucket. The cement was then poured from the bucket into polyethylene film lined trays and dried in an air oven at 130°F (54°C) until all of the solvent was evaporated.

The recovered polybutadiene polymer was then analyzed by DSC (differential scanning calorimeter), NMR (nuclear magnetic resonance), GPC (Gel permeation chromotography), and Mooney (ML1+4) testing. The results of the testing showed a Mooney (ML 1 +4) viscosity at 100°C of 67, a Tg of -91 °C and two spaced apart melt (Tm) temperatures of 30°C and 21.1°C, respectively.

The polybutadiene microstructure was determined to be comprised of a 1,2-polybutadiene content of 4.5 percent, a cis-1,4-polybutadiene content of 15.5 percent and a trans-1,4-polybutadiene content of 80 percent. Its molecular weights were determined to be an Mn of 138,500 and Mw of 247,200 with a Mw/Mn Heterogeniety Index (HI) of 1.78.

### EXAMPLE IV

### Preparation of Trans 1,4-Polybutadiene Polymer by Continuous Polymerization

This Example represents a preparation of a series of trans 1,4-polybutadiene polymers having a range of Mooney viscosity values.

The preparation is by a continuous polymerization process by polymerization of 1,3-butadiene monomer with a catalyst system composed of barium salt of di(ethylene glycol) ethylether (BaDEGEE), tri-n-octylaluminum (TOA) and n-butyllithium (n-BuLi).

Samples of high trans 1,4-polybutadienes were prepared using the continuous exemplary process described in Example III and identified herein as Samples A through E.

The Samples are summarized in the following Table 1. These polymers have a range of Mooney viscosity values of from 22 to 87.

**Table 1**

| Samples | A | B | C | D | E |
|---|---|---|---|---|---|
| Premixed Catalyst | | | | | |
| BaDEGEE/TOA/n-BuLi Molar ratio | 1/4/3 | 1/4/3 | 1/4/3 | 1/4/3 | 1/4/3 |
| Trans 1,4-PBd | 81.8 | 81.9 | 81.7 | 81.8 | 81.9 |
| Cis 1,4-PBd | 14.6 | 14.5 | 14.7 | 14.5 | 14.6 |
| Vinyl 1,2-PBd | 3.6 | 3.6 | 3.6 | 3.7 | 3.6 |
| Mooney (1+ML4) (100°C) | 87 | 54 | 32 | 22 | 26 |
| Tg (on set) (°C) | -91 | -91 | -90.5 | 91.4 | -91 |
| Tm 1 (°C) | 24.8 | 24.7 | 19.6 | 16.2 | 19.5 |
| Tm 2 (°C) | 32.7 | 32.8 | 33.4 | 31.9 | 32.8 |
| Mn (10³) | 127.7 | 90.1 | 73.7 | 57.2 | 64.1 |
| Mw (10³) | 302.7 | 214 | 175.3 | 153.1 | 162.3 |
| HI (Mw/Mn) | 4.2 | 2.4 | 2.4 | 2.7 | 2.5 |

### EXAMPLE V

### Rubber Compositions Which Contain a Partial Replacement of Natural Rubber With Trans 1,4-Polybutadienes of Example IV

Experiments were conducted to evaluate the feasibility of replacing a portion of natural rubber in a rubber composition with the trans 1,4-polybutadiene polymers of Example IV.

Rubber samples of natural rubber-rich rubber compounds and blends of natural rubber-rich rubber compounds were prepared, using trans 1,4-polybutadiene polymers A, B, C and D of Example IV. The natural rubber-rich samples are identified in this Example as rubber Samples "Cpd 1" through "Cpd 5", with rubber Sample "Cpd 1" being a Control Sample which did not contain a trans 1,4-polybutadiene polymer.

The rubber samples were prepared by mixing the rubber(s) together with reinforcing fillers and other rubber compounding ingredients in a first non-productive mixing stage an internal rubber mixer for 4 minutes to a temperature of 160°C. The mixture is then further sequentially mixed in an internal rubber mixer to a temperature for 2 minutes to a temperature of 160°C. The resulting mixture is then mixed in a productive mixing stage in an internal rubber mixer with curatives for 2 minutes to a temperature of 110°C. The rubber composition is cooled to below 40°C between each of the non-productive mixing steps and between the second non-productive mixing step and the productive mixing step.

The basic recipe for the rubber samples is presented in the following Table 2.

**Table 2**

| | Parts |
|---|---|
| First Non-Productive Mixing Step | |
| Natural cis 1,4-polyisoprene rubber | 100 or 70 |
| Trans 1,4-polybutadiene polymer¹ | 0 or 30 |
| Carbon black, N229² | 50 |
| Processing oil³ | 5 |
| Fatty acid⁴ | 2 |
| Antioxidant⁵ | 2 |
| Zinc oxide | 5 |

| Second Non-Productive Mixing Step | |
|---|---|
| Mixed to 160°, no ingredients added | |

| Productive Mixing Step | |
|---|---|
| Sulfur | 1.4 |
| Accelerator(s)⁶ | 1.0 |
| ¹Polymers A, B, C and D of Example IV | |
| ²N229, a rubber reinforcing carbon black ASTM designation | |
| ³Flexon 641 from the Exxon Mobil Company | |
| ⁴Blend comprised of stearic, palmitic and oleic acids. | |
| ⁵Quinoline type | |
| ⁶Tertiary butyl sulfenamide | |

The following Table 3 illustrates cure behavior and various physical properties of natural rubber-rich rubber compositions based upon the basic recipe of Table 1 and reported herein as a Control Sample "Cpd 1" and Samples "Cpd 2" through Cpd 5". Where cured rubber samples are examined, such as for the Stress-Strain, Rebound, Hardness, Tear Strength and Abrasion measurements, the rubber samples were cured for 32 minutes at a temperature of 150°C.

**Table 3**

| | Control | | | | |
|---|---|---|---|---|---|
| Rubber Compound (Cpd) Samples | Cpd 1 | Cpd 2 | Cpd 3 | Cpd 4 | Cpd 5 |
| Natural cis 1,4-polyisoprene rubber | 100 | 70 | 70 | 70 | 70 |
| Polymer Sample A. 87 Mooney | 0 | 30 | 0 | 0 | 0 |
| Polymer Sample B, 54 Mooney | 0 | 0 | 30 | 0 | 0 |
| Polymer Sample C, 32 Mooney | 0 | 0 | 0 | 30 | 0 |
| Polymer Sample D, 22 Mooney | 0 | 0 | 0 | 0 | 30 |

| Rehometer, 150°C (MDR)¹ | | | | | |
|---|---|---|---|---|---|
| Maximum torque (dNm) | 17.8 | 19.1 | 18.3 | 17.5 | 15.5 |
| Minimum torque (dNm) | 2.7 | 3.5 | 3.3 | 2.5 | 2.3 |
| Delta torque (dNm) | 15.1 | 15.6 | 15 | 15.1 | 13.2 |
| T90, minutes | 12.1 | 15.6 | 15.5 | 13.9 | 13.4 |

| Stress-strain (ATS)² | | | | | |
|---|---|---|---|---|---|
| Tensile strength (MPa) | 23.1 | 22.6 | 22.3 | 22 | 20.6 |
| Elongation at break (%) | 446 | 424 | 456 | 471 | 466 |
| 300% modulus (MPa) | 14.5 | 15 | 12.8 | 12.1 | 11.6 |

| Rebound | | | | | |
|---|---|---|---|---|---|
| 23°C | 50 | 53 | 51 | 50 | 47 |
| 100°C | 64 | 63 | 61 | 58 | 56 |

| Hardness (Shore A) | | | | | |
|---|---|---|---|---|---|
| 23°C | 65 | 67 | 65 | 66 | 65 |
| 100°C | 58 | 61 | 59 | 59 | 59 |
| Tear strength, N (23°C)³ | 363 | 302 | 346 | 360 | 413 |
| Tear strength, N (95°C)³ | 167 | 97 | 132 | 140 | 138 |
| DIN Abrasion (2.5N, cc loss)⁴ | 127 | 86 | 88 | 78 | 81 |

| RPA, 100°C, 1 Hz⁵ | | | | | |
|---|---|---|---|---|---|
| Storage modulus G', at 10% strain (kPa) | 1450 | 1580 | 1519 | 1390 | 1332 |
| Tan delta at 10% strain | 0.093 | 0.092 | 0.099 | 0.104 | 0.112 |
| ¹Data obtained according to Moving Die Rheometer instrument, model MDR-2000 by Alpha Technologies, used for determining cure characteristics of elastomeric materials, such as for example Torque, T90 etc. | | | | | |
| ²Data obtained according to Automated Testing System instrument by the Instron Corporation which incorporates six tests in one system. Such instrument may determine ultimate tensile, ultimate elongation, modulii, etc. Data reported in the Table is generated by running the ring tensile test station which is an Instron 4201 load frame. | | | | | |
| ³Data obtained according to a peel strength adhesion test to determine interfacial adhesion between two samples of a rubber composition. In particular, such interfacial adhesion is determined by pulling one rubber composition away from the other at a right angle to the untorn test specimen with the two ends of the rubber compositions being pulled apart at a 180° angle to each other using an Instron instrument. The area of contact at the interface between the rubber samples is facilitated by placement of a Mylar™ film between the samples with a cut-out window in the film to enable the two rubber samples to contact each other following which the samples are vulcanized together and the resultant composite of the two rubber compositions used for the peel strength test. | | | | | |
| ⁴Data obtained according to DIN 53516 abrasion resistance test procedure using a Zwick drum abrasion unit, model 6102 with 2.5 Newtons force. The DIN abrasion results are reported as relative values to a control rubber composition used by the laboratory. | | | | | |
| ⁵Data obtained according to Rubber Process Analyzer as RPA 2000™ instrument by Alpha Technologies, formerly the Flexsys Company and formerly the Monsanto Company. References to an RPA-2000 instrument may be found in the following publications: H. A. Palowski, et al, Rubber World, June 1992 and January 1997, as well as Rubber & Plastics News, April 26 and May 10, 1993. | | | | | |

As hereinbefore pointed out, significant physical properties for the natural rubber-rich rubber composition for a tire tread application are Rebound at 100°C and tan delta at 100°C which relate to rolling resistance of the tire and fuel economy for the associated vehicle with higher values being desired for the Rebound property at 100°C and lower values being desired for the tan delta property at 100°C.

Higher values of low strain stiffness properties as indicated by the Shore A hardness values and G' at 10 percent strain values are desired to promote cornering coefficient, handling and resistance to tire tread wear.

Higher tear strength values when measured at 23°C or 100°C are normally desired to promote chip chunk resistance of a tire tread.

Lower DIN abrasion values are normally desired as representing a resistance to abrasion and being predictive of resistance to tread wear as the associated vehicle is being driven.

From Table 3 it can also be seen that replacement of a portion of the natural rubber in Compound Sample "Cpd 5" with Sample D of Example IV, which was the trans 1,4-polybutadiene polymer having the lowest Mooney (100°C) viscosity of 22, together with the respective Mn and Mw molecular weights, resulted in a significant increase of unwanted hysteresis of the resulting rubber Compound Sample "Cpd 5" as compared to the unsubstituted natural rubber Compound Sample "Cpd 1" as well as rubber Compound Samples "Cpd 3" and "Cpd"4". The increase in hysteresis is evidenced in Table 3 by its lower Rebound property and higher tan delta property. The increase in hysteresis is considered herein as being unwanted for a natural rubber-rich tread rubber composition for a large tire expected to have a significant load bearing capability.

Accordingly, the lowest Mooney viscosity trans 1,4-polybutadiene polymer Sample D is considered herein to be too hysteretic to suitably use as a partial replacement of the natural rubber in the natural rubber-rich rubber composition for a tire tread, particularly for a tire tread of a large tire intended to experience heavy loads.

From Table 3 it can be seen that replacement of a portion of the natural rubber in Compound Sample "Cpd 2" with the Sample A of Example IV, which was the trans 1,4-polybutadene having the highest Mooney viscosity of 87, resulted in a significant unwanted reduction in tear strength of the resulting rubber Compound Sample "Cpd 2" as compared to the unsubstituted natural rubber Compound Sample "Cpd 1".

Accordingly, the highest Mooney viscosity trans 1,4-polybutadiene polymer Sample A is considered herein to be unsuitable for use as a partial replacement of the natural rubber in a rubber-rich tread rubber composition for a large tire expected to have a significant load bearing capability in use because the resulting tire tread would be expected to have an unwanted reduction in chip-chunk resistance.

It is seen from Table 3 that the best overall balance of physical properties for the natural rubber-rich rubber compositions are observed when using the trans 1,4-polybutadiene polymers of Samples B and C of Example IV, which had Mooney viscosities (100°C) of 32 and 54, to replace a portion of the natural rubber in the natural rubber-rich rubber composition for the tire tread intended to experience relatively heavy loads. These polymers are considered herein to be specialized trans 1,4-polybutdiene polymers as suitable candidates for partial replacement of natural rubber in a natural rubber-rich tire tread rubber composition when the aforesaid physical properties are desired.

In this Example, a series of trans 1,4-polybutadiene with Mooney viscosity properties ranging from 22 to 87 were evaluated in which the intermediate Mooney viscosity values of 32 and 54 provided the best balance of the representative physical properties, wherein the trans 1,4-polybutadiene polymer having Mooney value of 22 was considered to be too low and the trans 1,4-polybutadiene polymer having a Mooney value of 87 was considered to be too high. Accordingly, the trans 1,4-polybutadiene polymers having the intermediate Mooney viscosity values, together with their Mw, Mn, and dual melting temperature values (Tm's) are considered herein to be specialized trans 1,4-polybutadiene polymers for application in this invention.

### EXAMPLE VI

### Partial Replacement of Natural Rubber With a Low Mooney Trans 1,4-Polybutadiene

Additional experiments were conducted to evaluate a replacement of a portion of natural rubber in a rubber composition with a low Mooney trans 1,4-polybutadiene polymer E of Example IV having a Mooney viscosity (100°C) of 26.

Rubber sample blends were prepared with 15 and 30 phr, respectively, of the trans 1,4-polybutadiene polymer E of Example IV. The rubber samples are identified in this Example as rubber Samples "Cpd 6" through "Cpd 8" with Rubber Sample "Cpd 6" being a Control Sample.

The rubber compositions were prepared in the manner of Example V.

The basic recipe for the rubber samples is presented in Table 2 of Example V.

The following Table 4 illustrates cure behavior and various physical properties of the rubber compositions.

**Table 4**

| | Control | | |
|---|---|---|---|
| Samples | Cpd 6 | Cpd 7 | Cpd 8 |
| Natural cis 1,4-polyisoprene rubber | 100 | 85 | 70 |
| Polymer Sample E, 26 Mooney | 0 | 15 | 30 |

| Rheometer, 150°C (MDR) | | | |
|---|---|---|---|
| Maximum torque (dNm) | 17.8 | 17.7 | 16.7 |
| Minimum torque (dNm) | 2.8 | 3 | 2.9 |
| Delta torque (dNm) | 15 | 14.7 | 13.8 |
| T90, minutes | 13.2 | 14.8 | 15.2 |

| Stress-strain (ATS) | | | |
|---|---|---|---|
| Tensile strength (MPa) | 24.9 | 24.3 | 22.6 |
| Elongation at break (%) | 450 | 461 | 474 |
| 300% modulus (MPa) | 15.8 | 14.5 | 12.7 |

| Rebound | | | |
|---|---|---|---|
| 23°C | 51 | 51 | 50 |
| 100°C | 65 | 64 | 60 |

| Hardness (Shore A) | | | |
|---|---|---|---|
| 23°C | 65 | 66 | 65 |
| 100°C | 60 | 60 | 60 |
| Tear strength, N (23°C) | 304 | 312 | 352 |
| Tear strength, N (95°C) | 142 | 163 | 159 |
| DIN Abrasion (2.5N, cc loss) | 124 | 99 | 85 |

| RPA, 100°C, 1 Hz | | | |
|---|---|---|---|
| Storage modulus G', at 10% strain (kPa) | 1478 | 1461 | 1401 |
| Tan delta at 10% strain | 0.09 | 0.094 | 0.11 |

From Table 4 it is seen that use of the trans 1,4-polybutadiene Sample E of Example IV having a Mooney viscosity (100°C) of 26 as a partial replacement for the natural rubber in the natural rubber-rich rubber composition provided a good balance of the cure properties of abrasion, stiffness and hysteresis (rebound and tan delta). It is believed that the trans 1,4-polybutadiene polymer Mooney viscosity of 26 is in the nature of a lower boundary Mooney viscosity (100°C) for consideration as a suitable partial replacement of the natural rubber in the natural rubber-rich tire tread.

Accordingly, it is considered that the trans 1,4-polybutadiene polymer with the Mooney viscosity of 26 is a suitable specialized trans 1,4-polybutadiene polymer for such partial natural rubber replacement in a tire tread.

## Claims

1. A tire having a tread of a natural rubber-rich rubber composition, the rubber composition comprising, based upon parts by weight per 100 parts by weight rubber (phr):
(A) from 2 to 45 phr of a trans 1,4-polybutadiene polymer having a microstructure containing from 70 to 90 percent trans 1,4-units, a Mooney (ML 1+4) viscosity at 100°C in a range of from 25 to 55, a Tg in a range of from - 85°C to -95°C, an Mw of less than 220,000 and an Mn of less than 120,000;
(B) from 98 to 55 phr of natural cis 1,4-polyisoprene rubber having a Mooney (ML 1+4) viscosity (100°C) in a range of 60 to 100;
(C) from zero to 20 phr of at least one additional synthetic diene-based elastomer, so long as said natural rubber content of said rubber composition is at least 55 phr, selected from polymers of isoprene and/or 1,3-butadiene and copolymers of styrene together with isoprene and/or 1,3-butadiene; and
(D) from 30 to 120 phr of a particulate reinforcing filler comprising:
(1) from 5 to 120 phr of rubber reinforcing carbon black, and
(2) from zero to 60 phr of amorphous synthetic silica.

2. The tire of claim 1, wherein said natural rubber-rich rubber tread composition contains from 5 to 15 phr of said additional diene-based elastomer.

3. The tire of claim 1 or 2 wherein, for said natural rubber-rich rubber tread composition, said additional synthetic diene based elastomer is selected from at least one of synthetic cis 1,4-polyisoprene rubber, cis 1,4-polybutadiene rubber, styrene/butadiene copolymer rubber, isoprene/butadiene copolymer rubber, styrene/isoprene/butadiene terpolymer rubber, and 3,4-polyisoprene rubber.

4. The tire of at least one of the preceding claims wherein, for said natural rubber-rich rubber tread composition, said reinforcing filler also contains a silica-containing carbon black which contain domains of silica on its surface wherein the silica domains contain hydroxyl groups on their surfaces.

5. The tire of at least one of the preceding claims, wherein said natural rubber-rich rubber tread composition contains a silica coupler having a moiety reactive with hydroxyl groups on the silica and another moiety interactive with the elastomer(s).

6. The tire of claim 5, wherein said natural rubber-rich rubber tread composition, said silica coupler is:
(A) a bis-(3-trialkoxysilylalkyl) polysulfide, having an average of from 3.4 to 4 connecting sulfur atoms in its polysulfidic bridge, or
(B) a bis-(3-triethoxysilylpropyl) polysulfide having an average of from 2 to 2.6 connecting sulfur atoms in its polysulfidic bridge, or
(C) an organoalkoxymercaptosilane composition of the general Formula (I) represented as:
(I) (X)ₙ(R₇O)₃₋ₙ-Si-R₈-SH
wherein X is a radical selected from chlorine or bromine, alkyl radicals having from methyl, ethyl, propyl and butyl radicals; wherein R₇ is an alkyl radical selected from methyl and ethyl radicals; wherein R₈ is an alkylene radical having from one through 4; and n is an average value of from zero through 3, preferably zero, wherein, in such cases where n is zero or 1, R₇ may be the same or different for each (R₇O) moiety in the composition, and
(D) said organalkoxyomercaptosilane of the general Formula (I) capped with a moiety which uncaps the organoalkoxymercaptosilane upon heating to an elevated temperature.

7. The tire of claim 5 or 6, wherein, for said tread rubber composition, said silica coupler is comprised of an organoalkoxymercaptosilane selected from triethoxy mercaptopropyl silane, trimethoxy mercaptopropyl silane, methyl dimethoxy mercaptopropyl silane, methyl diethoxy mercaptopropyl silane, dimethyl methoxy mercaptopropyl silane, triethoxy mercaptoethyl silane, tripropoxy mercaptopropyl silane, ethoxy dimethoxy mercaptopropylsilane, ethoxy diisopropoxy mercaptopropylsilane, ethoxy didodecyloxy mercaptopropylsilane, ethoxy dihexadecyloxy mercaptopropylsilane and 3-octanoylthio-1-propyltriethoxysilane.

8. The tire of claim 5 or 6, wherein, for said tread rubber composition, said silica coupler is provided by being added directly to the elastomer mixture or by adding a composite of precipitated silica and such coupling agent to one or more to the elastomers, wherein said composite is formed by treating a precipitated silica with the coupling agent or by treating a colloidal silica therewith and precipitating the resulting composite.

9. The tire of at least one of the preceding claims, wherein, for said natural rubber-rich rubber tread composition, said trans 1,4-polybutadiene polymer has dual melting points (Tm's) within a temperature range of from 10°C to 45°C which are composed of a first melting point in a range of from 15°C to 25°C and a second, spaced apart, melting point in a range of from 25°C to 40°C.

10. The tire of at least one of the preceding claims, wherein, for said natural rubber-rich rubber tread composition, said specialized trans 1,4-polybutadiene polymer is prepared by polymerization in an organic solvent in the presence of a catalyst composite composed of
(A) the barium salt of di(ethylene glycol) ethylether (BaDEGEE), tri-n-octylaluminum (TOA) and n-butyl lithium (n-BuLi) in a molar ratio of the BaDEGEE to TOA to n-BuLi of 1:4:3, so long the resulting trans 1,4-polybutadiene polymer is said specialized trans 1,4-polybutadiene polymer, or
(B) the barium salt of di(ethylene glycol) ethylether (BaDEGEE), amine, tri-n-octylaluminum (TOA) and n-butyl lithium (n-BuLi) in a molar ratio of the BaDEGEE to amine to TOA to n-BuLi of 1:1:4:3, wherein said amine is selected from n-butyl amine, isobutyl amine, tert-butyl amine, pyrrolidine, piperidine and TMEDA (N, N, N',N'-tetramethylethylenediamine so long as the resulting trans 1,4-polybutadiene polymer is the said specialized trans 1,4-polybutadiene polymer.

## Patentansprüche

1. Ein Reifen mit einer Lauffläche aus einer naturkautschukreichen Kautschukzusammensetzung, umfassend, basiert auf Gewichtsteilen pro 100 Gewichtsteile Kautschuk (ThK) :
(A) 2 bis 45 ThK eines trans-1,4-Polybutadienpolymers mit einer Mikrostruktur, enthaltend 70 bis 90 Prozent trans-1,4-Einheiten, eine Mooney(ML 1+4)-Viskosität bei 100 °C in einem Bereich von 25 bis 55, einer Tg in einem Bereich von -85 °C bis -95 °C, einer Mw von weniger als 220.000 und einer Mn von weniger als 120.000 ;
(B) 98 bis 55 ThK natürlichen cis-1,4-Polyisoprenkautschuk mit einer Mooney(Ml 1+4)-Viskosität (100 °C) in einem Bereich von 60 bis 100 ;
(C) Null bis 20 ThK wenigstens eines zusätzlichen synthetischen dienbasierten Elastomers, solange besagter Naturkautschukgehalt besagter Kautschukzusammensetzung wenigstens 55 ThK beträgt, gewählt aus Polymeren von Isopren und/oder 1,3-Butadien und Copolymeren von Styrol zusammen mit Isopren und/oder 1,3-Butadien ; und
(D) 30 bis 120 ThK eines partikelförmigen Verstärkungsfüllstoffs, umfassend :
(1) 5 bis 120 ThK Kautschukverstärkungs-Carbon Black, und
(2) Null bis 60 ThK amorphes synthetisches Silika.

2. Der Reifen von Anspruch 1, wobei besagte naturkautschukreiche Kautschuk-Laufflächenzusammensetzung 5 bis 15 ThK besagten zusätzlichen dienbasierten Elastomers enthält.

3. Der Reifen von Anspruch 1 oder 2, wobei, für besagte naturkautschukreiche Kautschuk-Laufflächenzusammensetzung, besagtes zusätzliches synthetisches dienbasiertes Elastomer aus wenigstens einem von synthetischem cis-1,4-Polyisoprenkautschuk, cis-1,4-Polybutadienkautschuk, Styrol-/Butadien-Copolymerkautschuk, Isopren-/Butadien-Copolymerkautschuk, Styrol-/Isopren-/Butadien-Terpolymerkautschuk und 3,4-Polyisoprenkautschuk ausgewählt ist.

4. Der Reifen von wenigstens einem der vorhergehenden Ansprüche, wobei, für besagte naturkautschukreiche Kautschuk-Laufflächenzusammensetzung, besagter Verstärkungsfüllstoff auch ein silikahaltiges Carbon Black enthält, das Domänen von Silika an seiner Oberfläche enthält, wobei die Silikadomänen Hydroxylgruppen an ihren Oberflächen enthalten.

5. Der Reifen von wenigstens einem der vorhergehenden Ansprüche, wobei besagte naturkautschukreiche Kautschuk-Laufflächenzusammensetzung einen Silikakoppler enthält, der einen Anteil aufweist, der mit Hydroxylgruppen an dem Silika reaktiv ist, und einen anderen Anteil, der mit dem Elastomer bzw. den Elastomeren in Wechselwirkung tritt.

6. Der Reifen von Anspruch 5, wobei in besagter naturkautschukreicher Kautschuk-Laufflächenzusammensetzung besagter Silikakoppler folgendes ist :
(A) ein Bis-(3-trialkoxysilylalkyl) polysulfid mit einem Durchschnitt von 3,4 bis 4 verbindenden Schwefelatomen in seiner Polysulfidbrücke, oder
(B) ein Bis-(triethoxysilylpropyl) polysulfid mit einem Durchschnitt von 2 bis 2,6 verbindenden Schwefelatomen in seiner Polysulfidbrücke, oder
(C) eine Organoalkoxymercaptosilanzusammensetzung der allgemeinen Formel (I), dargestellt als :
(I) (X)ₙ(R₇O)₃₋ₙ-Si-R₈-SH
wobei X ein Radikal ist, gewählt aus Chlor oder Brom, Alkylradikalen mit Methyl-, Ethyl-, Propyl- und Butyl-Radikalen ; wobei R7 ein aus Methyl- und Ethylradikalen gewähltes Alkylradikal ist ; wobei R₈ ein Alkylenradikal mit einem bis einschließlich 4 ist ; und n ein Durchschnittswert von Null bis einschließlich 3 ist, bevorzugt Null, und wobei, in solchen Fällen, wo n Null oder 1 ist, R₇ für jeden (R₇O)-Anteil in der Zusammensetzung gleich oder verschieden sein kann, und
(D) besagtes Organoalkoxymercaptosilan der allgemeinen Formel (I) mit einem Anteil endgruppenabgeschlossen ist, der den Endgruppenabschluss des Organoalkoxymercaptosilans bei Erhitzen auf eine erhöhte Temperatur aufhebt.

7. Der Reifen von Anspruch 5 oder 6, wobei für besagte Laufflächen-Kautschukzusammensetzung, besagter Silikakoppler aus einem Organoalkoxymercaptosilan besteht, gewählt aus Triethoxymercaptopropylsilan, Trimethoxymercaptopropylsilan, Methyldimethoxymercaptopropylsilan, Methyldiethoxymercaptopropylsilan, Dimethylmethoxymercaptopropylsilan, Triethoxymercaptoethylsilan, Tripropoxymercaptopropylsilan, Ethoxydimethoxymercaptopropylsilan, Ethoxydiisopropoxymercaptopropylsilan, Ethoxydidodecyloxymercaptopropylsilan, Ethoxydihexadecyloxymercaptopropylsilan und 3-Octanoylthio-1-propyltriethoxysilan.

8. Der Reifen von Anspruch 5 oder 6, wobei für besagte Laufflächen-Kautschukzusammensetzung besagter Silikakoppler vorgesehen wird, indem er der Elastomermischung direkt zugesetzt wird oder indem ein Verbundmaterial aus ausgefälltem Silika und solchem Kopplungsmittel einem oder mehreren der Elastomere zugesetzt wird, wobei besagtes Verbundmaterial durch Behandeln eines ausgefällten Silikas mit dem Kopplungsmittel oder durch damit Behandeln eines kolloidalen Silikas und Ausfällen des resultierenden Verbundmaterials gebildet wird.

9. Der Reifen von wenigstens einem der vorhergehenden Ansprüche, wobei, für besagte naturkautschukreiche Kautschukzusammensetzung, besagtes spezielles trans-1,4-Polybutadienpolymer doppelte Schmelzpunkte (Tm's) innerhalb eines Temperaturbereichs von 10 °C bis 45 °C aufweist, die sich aus einem ersten Schmelzpunkt in einem Bereich von 15 °C bis 25 °C und einem zweiten, davon beabstandeten, Schmelzpunkt in einem Bereich von 25 °C bis 40 °C zusammensetzen.

10. Der Reifen von wenigstens einem der vorhergehenden Ansprüche, wobei, für besagte naturkautschukreiche Kautschukzusammensetzung, besagtes spezielles trans-1,4-Polybutadienpolymer hergestellt werden kann durch Polymerisation in einem organischen Lösungsmittel in Gegenwart eines Katalysatorverbundmaterials, zusammengesetzt aus :
(A) dem Bariumsalz von Di(ethylenglykol)ethylether (BaDEGEE), Tri-n-octylaluminium (TOA) und n-Butyllithium (n-BuLi) in einem Molverhältnis des BaDEGEE zu TOA zu n-BuLi von 1 : 4 : 3, solange das resultierende trans-1,4-Polybutadienpolymer das besagte spezielle trans-1,4-Polybutadienpolymer ist, oder
(B) dem Bariumsalz von Di(ethylenglykol)ethylether (BaDEGEE), Amin, Tri-n-octylaluminium (TOA) und n-Butyllithium (n-BuLi) in einem Molverhältnis des BaDEGEE zu Amin zu TOA zu n-BuLi von 1 : 1 : 4 : 3, wobei besagtes Amin aus n-Butylamin, Isobutylamin, tert-Butylamin, Pyrrolidin, Piperidin und TMEDA (N,N,N',N'-Tetramethylethylendiamin) ausgewählt ist, solange das resultierende trans-1,4-Polybutadienpolymer das besagte spezielle trans-1,4-Polybutadienpolymer ist.

## Revendications

1. Bandage pneumatique possédant une bande de roulement d'une composition de caoutchouc riche en caoutchouc naturel, la composition de caoutchouc comprenant, basées sur des parties en poids par 100 parties en poids de caoutchouc (phr) :
(A) à concurrence de 2 à 40 phr, un polymère de trans 1,4-polybutadiène possédant une microstructure contenant, à concurrence de 70 à 90 %, des unités 1,4 en configuration trans, une viscosité de Mooney (ML 1+4) à 100 °C dans la plage de 25 à 55, une valeur Tg dans la plage de -85 °C à -95 °C, une valeur Mw inférieure à 220.000 et une valeur Mn inférieure à 120.000 ;
(B) à concurrence de 98 à 55 phr, du caoutchouc naturel de cis 1,4-polyisoprène possédant une viscosité de Mooney (ML 1+4) à 100 °C dans la plage de 60 à 100 ;
(C) à concurrence de 0 à 20 phr, au moins un élastomère synthétique supplémentaire à base diénique, pour autant que ladite teneur en caoutchouc naturel de ladite composition de caoutchouc s'élève à au moins 55 phr, choisi parmi le groupe comprenant des polymères d'isoprène et/ou du 1,3-butadiène et des copolymères de styrène avec de l'isoprène et/ou du 1,3-butadiène ; et
(D) à concurrence de 30 à 120 phr, une matière de charge de renforcement particulaire comprenant ;
(1) à concurrence de 5 à 120 phr, du noir de carbone de renforcement de caoutchouc ; et
(2) à concurrence de 0 à 60 phr, de la silice synthétique amorphe.

2. Bandage pneumatique selon la revendication 1, dans lequel ladite composition de caoutchouc de bande de roulement riche en caoutchouc naturel contient ledit élastomère supplémentaire à base diénique à concurrence de 5 à 15 phr.

3. Bandage pneumatique selon la revendication 1 ou 2, dans lequel, pour ladite composition de caoutchouc de bande de roulement riche en caoutchouc naturel, ledit élastomère synthétique supplémentaire à base diénique représente au moins un membre choisi parmi le groupe constitué par du caoutchouc synthétique de cis 1,4-polyisoprène, du caoutchouc de cis 1,4-polybutadiène, du caoutchouc de copolymère de styrène/butadiène, du caoutchouc de copolymère d'isoprène/butadiène, du caoutchouc de terpolymère de styrène/isoprène/butadiène, et du caoutchouc de 3,4-polyisoprène.

4. Bandage pneumatique selon au moins une des revendications précédentes, dans lequel, pour ladite composition de caoutchouc de bande de roulement riche en caoutchouc naturel, ladite matière de charge de renforcement contient également un noir de carbone contenant de la silice, qui contient des domaines de silice sur sa surface, les domaines de silice contenant des groupes hydroxyle sur leur surface.

5. Bandage pneumatique selon au moins une des revendications précédentes, dans lequel ladite composition de caoutchouc de bande de roulement en caoutchouc naturel contient un agent de couplage pour la silice possédant une fraction apte à réagir avec des groupes hydroxyle sur la silice et une autre fraction entrant en interaction avec l'élastomère ou les élastomères.

6. Bandage pneumatique selon la revendication 5, dans lequel, pour ladite composition de caoutchouc de bande de roulement riche en caoutchouc naturel, ledit agent de couplage pour la silice est :
(A) un bis-(3-trialcoxysilylalkyl) polysulfure possédant en moyenne de 3,4 à 4 atomes de soufre de liaison dans son pont polysulfure ; ou
(B) un bis-(3-triéthoxysilylpropyl) polysulfure possédant en moyenne de 2 à 2,6 atomes de soufre de liaison dans son pont polysulfure ; ou
(C) une composition d'organoalcoxymercaptosilane répondant à la formule générale (I) :
(I) (X)ₙ(R₇O)₃₋ₙ-Si-R₈-SH
où X représente un radical choisi parmi le groupe comprenant le chlore et le brome, des radicaux alkyle choisis parmi des radicaux méthyle, éthyle, propyle et butyle ; R₇ représente un radical alkyle choisi parmi des radicaux méthyle et éthyle ; et R₈ représente un radical alkylène contenant de 1 à 4 atomes de carbone ; et n représente une valeur moyenne de 0 à 3, de préférence 0 ; dans des cas dans lesquels n représente 0 ou 1, les radicaux R₇ peuvent être identiques ou différents pour chaque fraction (R₇O) dans la composition ; et
(D) ledit organoalcoxymercaptosilane répondant à la formule générale (I) est bloqué avec une fraction qui débloque l'organoalcoxymercaptosilane lorsqu'on chauffe à une température élevée.

7. Bandage pneumatique selon la revendication 5 ou 6, dans lequel, pour ladite composition de caoutchouc de bande de roulement, ledit agent de couplage pour la silice comprend un organoalcoxymercaptosilane choisi parmi le groupe comprenant le triéthoxy mercaptopropyl silane, le triméthoxy mercaptopropyl silane, le méthyl diméthoxy mercaptopropyl silane, le méthyl diéthoxy mercaptopropyl silane, le diméthyl méthoxy mercaptopropyl silane, le triéthoxy mercaptoéthyl silane, le tripropoxy mercaptopropyl silane, l'éthoxy diméthoxy mercaptopropyl silane, l'éthoxy diisopropoxy mercaptopropyl silane, l'éthoxy didodécyloxy mercaptopropyl silane, l'éthoxy dihexadécyloxy mercaptopropyl silane et le 3-octanoylthio-1-propyltriéthoxysilane.

8. Bandage pneumatique selon la revendication 5 ou 6, dans lequel, pour ladite composition de caoutchouc de bande de roulement, ledit agent de couplage pour la silice est prévu en ajoutant directement au mélange élastomère ou en ajoutant un composite de silice précipitée et d'un tel agent de couplage à un élastomère ou à plusieurs élastomères, ledit composite étant obtenu en traitant une silice précipitée avec l'agent de couplage ou bien en traitant une silice colloïdale avec ledit agent de couplage et en précipitant le composite résultant.

9. Bandage pneumatique selon au moins une des revendications précédentes, dans lequel, pour ladite composition de caoutchouc de bande de roulement riche en caoutchouc naturel, ledit polymère de trans 1,4-polybutadiène possède des doubles points de fusion (Tm) dans la plage de température de 10 °C à 45 °C, qui sont composées d'un premier point de fusion dans la plage de 15 °C à 25 °C et d'un deuxième point de fusion, séparé, dans la plage de 25 °C à 40 °C.

10. Bandage pneumatique selon au moins une des revendications précédentes, dans lequel, pour ladite composition de caoutchouc de bande de roulement riche en caoutchouc naturel, ledit polymère spécialisé de trans 1,4-polybutadiène est préparé par polymérisation dans un solvant organique en présence d'un composite de catalyseur composé de
(A) le sel de baryum de l'éther éthylique de diéthylèneglycol (BaDEGEE), du tri-n-octylaluminium (TOA) et du n-butyl lithium (BuLi) dans le rapport molaire BaDEGEE : TOA : n-BuLi de 1 : 4 : 3, pour autant que ledit polymère résultant de trans 1,4-polybutadiène représente ledit polymère spécialisé de trans 1,4-polybutadiène ; ou
(B) le sel de baryum de l'éther éthylique de diéthylèneglycol (BaDEGEE), une amine, du tri-n-octylaluminium (TOA) et du n-butyl lithium (BuLi) dans le rapport molaire BaDEGEE : amine : TOA : n-BuLi de 1 : : 1 : 4 : 3, ladite amine étant choisie parmi le groupe comprenant la n-butylamine, l'isobutylamine, la tert-butylamine, la pyrrolidine, la pipéridine, et la TMEDA (N,N,N',N'-tétraméthyléthylènediamine), pour autant que ledit polymère résultant de trans 1,4-polybutadiène représente ledit polymère spécialisé de trans 1,4-polybutadiène.
